# EUROPEAN PATENT APPLICATION

(11) **EP 4 321 547 A1**
(43) Date of publication of application: **14.02.2024**
(21) Application number: 22190163.0
(22) Date of filing: 12.08.2022
(51) Int. Cl.: C08G 8/04, C08G 8/28, C08L 61/00, C08L 97/00

(54) **CROSSLINKABLE SYSTEMS**

(71) Applicant: Prefere Resins Holding GmbH, 15537 Erkner (DE)
(72) Inventor: WINTER, Johannes Georg, 58239 Schwerte (DE); KNIE, Christopher, 12459 Berlin (DE)
(74) Representative: Deckers, Hellmuth Alexander

(57) **Abstract**

This invention is directed to crosslinkable systems comprising a crosslinker B and an organic polymer P having aromatic moieties with increased electron density in comparison with benzene at unsubstituted carbon atoms in the said aromatic moiety, wherein the crosslinkers B are aromatic compounds having least two diazonium groups of formula -^{⊕}N≡N, to a process for the preparation of these crosslinkable systems, and to a method of use thereof in the preparation of adhesives and coating films comprising these crosslinkable systems.

## Description

### Field of the Invention

This invention is directed crosslinkable systems comprising an organic polymer P having aromatic moieties with increased electron density in comparison with benzene at unsubstituted carbon atoms in the said aromatic moiety, and a crosslinker B which is an aromatic compound having least two diazonium groups of formula -^{⊕}N≡N.

### Background of the Invention

Polymers can be prepared by polymerisation, i. e. by polycondensation or by polyaddition, of bifunctional compounds, which have either reactive groups that are consumed during the polymerisation step, optionally under liberation of a condensate in the case of a polycondensation, such as water when polycondensing a diacid with a dihydroxy compound, or a diacid with a diamino compound, or, in the case of polymerisation of vinyl type monomeric compounds, including polyolefins, by adding an initiator which forms a radical from a monomer molecule which in turn adds to a next monomer molecule to generate a dimer radical and so on, or, in the case of heterocyclic monomers such as cyclic esters (lactones), cyclic amides (lactames), cyclic ethers (oxiranes or formals), or cyclic imines (aziridines) by ring opening, usually with a catalyst. In the case of more than two functional groups in the monomer molecules, branched and crosslinked structures can be formed. This is often desired, particularly in coating films, or in the formation of three-dimensional bodies that need to keep a pre-determined shape, and to fulfil chemical requirements such as resistance to solvents, light and weathering, and mechanical requirements such as abrasion resistance, flexibility, hardness, stiffness, and tenacity.

Crosslinking can be effected in thermoset materials by adding compounds, generally referred to as "crosslinkers" having at least two functional groups in their molecule that are able to react with functional groups in the repeating units of a resinous binder that is usually an organic polymer, or an oligomer with a number-average degree of polymerisation of up to about ten. This reaction is referred to as curing, and it can be initiated by heat or other supply of energy to the materials, such as light, particularly UV light, or actinic radiation. In the same way as in the chemistry of polymerisation, crosslinkers may react under addition, or under condensation with the functional groups of the repeating units of the polymer.

A crosslinkable system as described herein comprises at least the following components: a polymer or oligomer usually referred to as "binder" or "binder resin", having at least two, generally more than two, functional groups **GP,** and a crosslinker **C** which has at least two, and preferably not more than six functional groups **GC** which are able to react with the functional groups **GP** under formation of a chemical bond, and optionally, under liberation of a condensate which may be water, or a volatile compound such as an aliphatic alcohol R-OH, as in the transetherification curing reaction of an etherified amino resin as crosslinker **C** having >N-CH₂-O-R functional groups **GC,** and a hydroxy-functional binder resin with the symbolic structure ∼∼- OH having hydroxyl groups -OH as functional groups **GP,** where the chemical bond formed has the structure >N - CH₂ - O -∼∼, or in the transurethanisation curing with a blocked isocyanate as crosslinker **C,** and a hydroxy-functional binder resin ∼∼- OH having hydroxyl groups -OH as functional groups **GP,** under liberation of the blocking compound, and addition of the free isocyanate group to the binder resin under formation of a urethane bond, ∼∼- O - C(O) - NH - X, where ∼∼- stands for the binder resin after removal of one hydroxyl group, and O=C=N-X stands for the blocked isocyanate crosslinker in its unblocked state.

Among the crosslinkers used in thermoset resins, also including resins for coatings and adhesives, amino resins have found wide acceptance. These are monomeric or oligomeric adducts of amines, amides, or imides with aliphatic aldehydes, mostly formaldehyde, which adducts are optionally etherified with aliphatic alcohols usually having from one to four carbon atoms per molecule. As emissions of formaldehyde have been limited in many countries (see, e. g. emission standards in US effective December 2018, for wood products in range of 0.05 mg/kg to 0.13 mg/kg, depending on the kind), it is desired to reduce the use of formaldehyde, or to replace it in many formulations.

Novolak-based phenolic resins are usually crosslinked with hexamethylene tetramine, or with resoles. Both compounds provide formaldehyde at increased temperature which reacts with the novolak under formation of methylol groups which in turn can react to form dimethyl ether bridges or methylene bridges and thus lead to formation of crosslinks.

### Object of the Invention

It is therefore an object of the invention to provide a crosslinker **B** for phenolic resins, such as novolaks **N,** and resoles **R,** and for other organic polymers **P** that comprise activated aromatic moieties which have a higher electron density in the aromatic nucleus than benzene, which crosslinker has a reduced formaldehyde content, or is preferably free from formaldehyde, and leads to reduced evolution of formaldehyde, or preferably does not evolve formaldehyde at all, during the crosslinking step. In the acid-catalysed synthesis of novolaks N, where the ratio of the amount of substance *n*_{F} of formaldehyde to the amount of substance *n*_{P} of phenol is usually 0.75 mol/mol ≤ *n*_{F} / *n*_{P} ≤ 0.85 mol/mol, the positions ortho or para with regard to the phenolic hydroxyl group have higher electron density due to the mesomeric effect of the hydroxyl group resulting from two free electron pairs in the oxygen atom. The synthesis of resoles **R** is base-catalysed, and is usually conducted with a ratio of the amount of substance *n*_{F} of formaldehyde to the amount of substance *n*_{P} of phenol is usually 1.0 mol/mol ≤ *n*_{F} / *n*_{P} ≤ 4.0 mol/mol (see L. Pilato ed., Phenolic Resins - A Century of Progress, Heidelberg 2010, p. 141). Phenol alcohols such as saligenin (ortho-hydroxybenzyl alcohol), homosaligenin (para-hydroxybenzyl alcohol) as well as trihydroxymethylphenol are formed, and depending on the stoichiometry and reaction conditions, resins with various degree of branching and condensation are formed. Other polymers **P** are particularly lignin **L,** and also tannins **T.** Preferred are especially lignin grades that have a higher electron density in the (unsubstituted) 3- and 5-positions of the aromatic ring of a p-hydroxyphenyl unit H, viz., both in the ortho position with relation to the phenolic hydroxyl group (the 1-position is substituted by the C₃-residue of the phenylpropanoid, and the hydroxyl group is in the 4-position), and also in the (unsubstituted) 2- and 6-positions of the aromatic rings (where the 1-position is substituted by the C₃-residue of the phenylpropanoid, and the 4-position carries the hydroxyl group) due to the methoxy substituents in the 3-position (in a guaiacyl unit G), or in both the 3- and 5-positions (in a syringyl unit S), of the lignin structure. In the structure of lignin, the p-hydroxyphenyl (H) unit is derived from the precursor p-coumaryl alcohol, the guaiacyl (G) unit is derived from the precursor coniferyl alcohol, and the syringyl (S) unit is derived from the precursor sinapyl alcohol. Electrophilic substitution reactions are facilitated in the positions mentioned supra due to the mesomeric effect of the phenolic hydroxyl group (in the H unit) and of the methoxy groups (in the G and S units). Crosslinkers which are aromatic organic compounds **B** that have at least two diazonium groups according to the formula X (-^{⊕}N≡N)ᵢ where i is an integer number of at least two: i ≥ 2, and X is an at least divalent aromatic group, have been found useful in combination with novolaks **N,** with resoles **R,** and/or the said other polymers **P** that comprise activated aromatic moieties which have a higher electron density in the aromatic nucleus than benzene. It is a further object of the invention to use other polymers, particularly preferred biopolymers, including lignin **L** and tannin **T** as discussed supra, and also polysaccharides including cellulose, hemicellulose, starch, chitin and chitosan. As polysaccharides themselves do not contain noteworthy amounts of aromatic moieties, modification e. g. by grafting of aromatic compounds having substituents that contribute to higher electron density at unsubstituted positions of carbon atoms in the said aromatic compound, onto the polysaccharides as mentioned hereinabove can provide the needed reactive sites for the intended azo coupling. The same improvement by such grafting steps can also be applied, in conformance with the present invention, to lignins as the aromatic residues therein often show low reactivity due to sterical hindrance. Among the said aromatic compounds, alkoxylated styrenes, particularly methoxy styrene and dimethoxy styrene have shown positive effect on the crosslinking efficiency.

The invention is therefore directed to crosslinkable systems comprising crosslinkers **B** and organic polymers for novolaks **N,** resoles **R,** and other natural polymers **P** particular including lignin **L** and tannin **T,** having aromatic moieties with increased electron density in comparison with benzene at unsubstituted carbon atoms in the said aromatic moiety, wherein the crosslinkers **B** are aromatic compounds having least two diazonium groups of formula -^{⊕}N≡N.

### State of the art

In the patent GB 719 701 A, a thermosetting compound is disclosed which is cured by heating, comprising BNR (butadiene-acrylonitrile rubber) and phenolic resin, and a blowing agent (where azobis-isobutyronitrile is mentioned as one possible compound), and polyamide fibres as reinforcing agents. The phenolic resin includes novolaks and cashew nut shell oil resins. In all examples, hexamethylene tetramine is used as crosslinker. No compounds **B** according to the present invention are mentioned.

In the patent US 3274166 A, a method is disclosed to prepare vulcanisates that are tough, resilient, solvent resistant, and odour free, by heating hydrocarbon polymers in admixture with a poly(diazo) compound. According to the formulae given in col.1, lines 37 to 41, the diazo group is not directly bound to the aryl groups A. A diazo group is not the same as a diazonium group, the latter is a cationic compound, while a diazo compound is an electrically neutral body. The hydrocarbon polymers are listed as polyethylene, polypropylene, polystyrene, styrene-butadiene rubber, butyl rubber, natural rubber, polybutadiene, polyisobutylene, ethylene-propylene copolymer, cis-1,4-polyisoprene, ethylene-propylene-dicyclopentadiene terpolymer, etc., and blends of these polymers with each other. See col. 3, lines 20 to 25. No novolaks **N,** resoles **R,** lignins **L,** or other natural aromatic polymers **P** having aromatic moieties with increased electron density in comparison with benzene at unsubstituted carbon atoms in the said aromatic moiety are mentioned.

In the patent US 3778270 A, a crosslinkable photosensitive composition is disclosed which comprises a bis-diazonium salt with a natural or synthetic macromolecular organic polymer having pendant reactive groups which are preferably hydroxyl or amino groups. The compositions are useful in elements for the preparation of relief images, photoresist applications, etc. Per claim 1, protected is: A positive working, crosslinkable photosensitive composition comprising a mixture of 1.) a photosensitive bis-diazonium salt wherein the cation portion of the salt is of the formula: N=N⁺- R'- Y- (CH₂)ₙ- Y- R' - N⁺≡N, wherein R' is benzene, naphthalene, anthracene, or phenanthrene, Y is -COO- or -SO₃- and R' is attached to the carbon or sulphur atom of -COO- or -SO₃- respectively, n is a cardinal number of at least 4, and the anion portion of the salt is an anion of an inorganic salt, and 2.) a polymer crosslinkable in the presence of said bis-diazonium salt in a basic environment, the polymer consisting of a substantially unhardened, macromolecular organic colloid having pendant recurring hydroxyl or amino groups and are preferably selected from polymeric polyols, or natural colloids such as gelatin, glue, shellac; addition polyesters, e. g., polyacrylic and polymethacrylic acid esters; polyvinyl alcohol, and poly-p-aminostyrene. These organic colloids are different from those novolaks **N,** resoles **R,** lignins **L,** or other natural aromatic polymers **P** having aromatic moieties with increased electron density in comparison with benzene at unsubstituted carbon atoms in the said aromatic moiety.

In the patent CH 621568 A5, the preparation of dyes from diazo compounds and dyestuff intermediates is disclosed which latter are prepared by reacting, under acidic conditions, an amount of substance of x mol of compounds of formula I, or mixtures of compounds of formula I 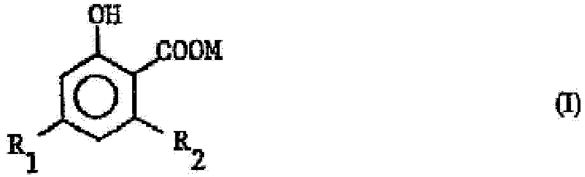 wherein R₁ and R₂ each stand for hydrogen, halogen, hydroxy, optionally substituted alkyl or alkyloxy, and M stands for hydrogen or an equivalent of a cation, and an amount of substance of (1-x) mol of a compound of Formula II or a mixture of compounds of formula II 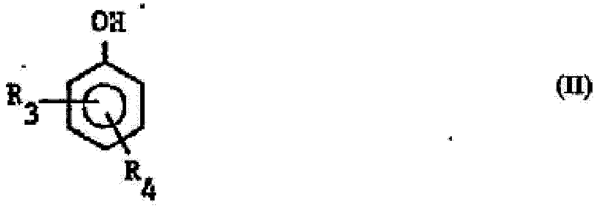 wherein R₃ stands for hydrogen, halogen, hydroxy or optionally substituted alkyl or alkyloxy, and R₄ stands for hydrogen, halogen, hydroxy or optionally substituted alkyl or alkyloxy, and wherein x stands for a number between 0 and 1, with the exception of 1, and wherein at least 0.5 mol of the compounds used must comprise a -COOM group, with at least 0.6 mol of formaldehyde, or a formaldehyde-liberating compound which liberates this same amount of substance of formaldehyde. Examples for compounds of formula I, in the form of free acids, are salicylic acid, m-cresotic acid, 2,4-dihydroxybenzoic acid, 2,6-dihydroxybenzoic acid, and 4-chloro-2-hydroxybenzoic acid, salicylic acid being especially preferred. Examples for compounds of Formula II are phenol, resorcinol, o-cresol, p-cresol, o-chlorophenol, p-chlorophenol, 3-methoxyphenol, 3-hydroxyphenoxyacetic acid. None of the dyestuff intermediates is the same as, or equivalent to, novolaks N, resoles R, lignins L, or other natural aromatic polymers P having aromatic moieties with increased electron density in comparison with benzene at unsubstituted carbon atoms in the said aromatic moiety. Although numerous aromatic monoamines have been mentioned, there is no mention of a defined aromatic diamine, nor of a bis-diazonium salt prepared therefrom.

### Detailed Description of the Preferred Embodiments

The crosslinkers B which are aromatic compounds having at least two diazonium groups of formula -^{⊕}N≡N are derived from aromatic diamines and polyamines by reaction thereof with nitrous acid. Preferred are aromatic diamines and triamines.

Preferred aromatic diamines have two amino groups directly bound to aromatic moieties, such as 1,2-diaminobenzene, 1,3-diaminobenzene, 1,4-diaminobenzene, 2,3-diaminotoluene, 2,4-diaminotoluene, 3,4-diaminotoluene, 1,2-diaminonaphthalene, 1,4-diaminonaphthalene, 1,5-diaminonaphthalene, 1,8-diaminonaphthalene, 4,4'-diaminodiphenyl, 3,3'-dimethyl-4,4'-diaminodiphenyl, 3,3',5,5'-tetramethyl-4,4'-diaminodiphenyl, 2,7-diaminofluorene, 4,4'-diaminodiphenylmethane, 3,4'-diaminodiphenylmethane, 4,4'-diaminostilbene, 4,4'-diaminobenzophenone, 4,4'-diaminodiphenylsulphone, 2,2'-diaminodiphenylether, 4,4'-diaminodiphenylether, 3,4'-diaminodiphenylether, 2,7-diaminofluorene, bis-(3-aminophenyl)methane, 1,3-bis(4-aminophenoxy)-benzene, 4,4'-bis-(4-aminophenoxy)-biphenyl, 2,2-bis[4-(4-amino-phenoxy)-phenyl]-propane, and also phosphorus-based aromatic diamines such as bis-(4-aminophenyl)phosphinoxide, bis-(3-aminophenyl)phosphinoxide, bis-(2-aminophenyl)-phosphinoxide, and P-alkyl derivatives thereof where the alkyl group is methyl, ethyl, n-propyl, isopropyl, n-butyl, or isobutyl, and mixtures of two or more of the aromatic diamines mentioned.

Among the aromatic triamines, the most promising compounds are 1,3,5-tris-(4-aminophenyl)benzene, 1,3,5-tris-(4-aminophenoxy)benzene, 2,4-bis-(p-aminobenzyl)aniline, tris-(4-aminophenyl)methane, 1,3,5-tris(4-aminophenylcarbamoyl)benzene, 4-((4-amino-3,5-diethylphenyl)methyl)-2-((4-aminophenyl)methyl)aniline, 2-((4-amino-3,5-diethylphenyl)-methyl)4-((4-aminophenyl)methyl)aniline, 4-((4-amino-3-isopropylphenyl)methyl)--2-((4-aminophenyl)methyl)aniline, 2-((4-amino-3-isopropylphenyl)methyl)-4-((4-aminophenyl)methyl)aniline, 4-((4-amino3,5-diisopropylphenyl)methyl)-2-((4-aminophenyl)-methyl)aniline,2-((4-amino3,5-diisopropylphenyl)methyl)-4-((4-aminophenyl)methyl)aniline, 5'-[4-(dimethylamino)phenyl]-N,N,N',N'-tetramethyl-1,1':3',1"-terbenzene-4,4"-diamine, 2,4-di-phenylbenzene-1,3,5-triamine, 3,5-bis[(4-aminophenyl)methyl]aniline, 1,3,5-tris(4-aminophenyl)benzene, 4,4',4"-methanetriyltris(2-methylaniline), 4,4',4"-ethylidynetrisaniline, bis-(4-aminophenyl)phosphinoxide, and phosphorus-based aromatic triamines such as tris-(4-aminophenyl)phosphinoxide, tris-(3-aminophenyl)phosphinoxide, tris-(2-aminophenyl)-phosphinoxide, and mixtures of two or more of the aromatic triamines mentioned. It is also possible to use mixtures of one or more of the aromatic diamines as mentioned, mixtures of one or more of the aromatic triamines as mentioned, and also mixtures of at least one aromatic diamine as mentioned and at least one aromatic triamine as mentioned. Particularly preferred are those aromatic amines the have an electron-withdrawing substituent in the aromatic ring that also carries the primary amino group, such as 2-nitro-1,4-phenylenediamine, 2-nitrobenzidine, 3,3'-dinitrobenzidine, and 4,4'-diaminodiphenyl sulfone.

The novolaks N can be derived from phenol itself, ortho-, meta-, and para-cresol, longer chain alkyl phenols such as ethyl phenols, and isomers of propyl phenols, butyl phenols, nonyl phenols, dodecyl phenols, and also cashew nut shell oil based phenols such as cardol and cardanol, as well as from dihydroxyaromatic compounds such as resorcinol and bisphenol A, and mixtures of these phenolic compounds as mentioned, preferably mixtures of phenol and cresols, and of aldehydes, preferably aliphatic aldehydes such as formaldehyde, acetaldehyde, propionaldehyde, butyraldehyde, and isobutyraldehyde, or also aliphatic dialdehydes such as glyoxal, malonaldehyde (propanedial), succinaldehyde (butanedial), and glutaraldehyde (pentanedial); and also cycloaliphatic aldehydes such as furfural (IUPAC name: furan-2-carbaldehyde), 5-hydroxymethylfurfural (IUPAC name: 5-(hydroxymethyl)-furan-2-carbaldehyde), furan-2,5-dicarbaldehyde; most preferred are formaldehyde and 5-hydroxymethylfurfural. During the industrial preparation of novolaks, the aldehyde is present in substoichiometric quantities which contributes to the low amount of residual aldehyde in the novolak. Novolaks from formaldehyde and phenol are prepared under acid catalysis, where oxalic acid, hydrochloric acid, sulfuric acid, p-toluenesulfonic acid, and phosphoric acid are most frequently used. The ratio of the amount of substance *n*_{F} of formaldehyde to the amount of substance *n*_{P} of phenol is usually 0.75 mol/mol ≤ *n*_{F} / *n*_{P} ≤ 0.85 mol/mol.

Good results have been achieved when using high ortho novolaks, particularly those derived from phenolic compounds and formaldehyde, which are preferably made by reacting phenol with formaldehyde in a pH range of from 4 to 6. The catalysts preferably used are salts of divalent metals with weak acids, preferably acetates of Co, Mg, Zn, Cd, Pb, Cu, Co, Ni. A useful range of molar mass of novolaks N has been found to be 550 g/mol ≤ *M*ₙ ≤ 2 kg/mol for the number-average molar mass, and for the mass average molar mass 1200 g/mol ≤ *M*ₘ ≤ 20 kg/mol.

The resoles R can be derived from phenol itself, ortho-, meta-, and para-cresol, longer chain alkyl phenols such as ethyl phenols, and isomers of propyl phenols, butyl phenols, nonyl phenols, dodecyl phenols, and also cashew nut shell oil based phenols such as cardol and cardanol, as well as from dihydroxyaromatic compounds such as resorcinol and bisphenol A, and mixtures of these phenolic compounds as mentioned, preferably mixtures of phenol and cresols, and of aldehydes, preferably aliphatic aldehydes such as formaldehyde, acetaldehyde, propionaldehyde, butyraldehyde, and isobutyraldehyde, or also aliphatic dialdehydes such as glyoxal, malonaldehyde (propanedial), succinaldehyde (butanedial), and glutaraldehyde (pentanedial); and also cycloaliphatic aldehydes such as furfural (IUPAC name: furan-2-carbaldehyde), 5-hydroxymethylfurfural (IUPAC name: 5-(hydroxymethyl)-furan-2-carbaldehyde), furan-2,5-dicarbaldehyde; most preferred are formaldehyde and 5-hydroxymethylfurfural. Resoles R are industrially prepared with a base catalyst, and with a ratio of the amount of substance *n*_{F} of formaldehyde to the amount of substance *n*_{P} of phenol of usually 1.0 mol/mol ≤ *n*_{F} / *n*_{P} ≤ 4.0 mol/mol (see L. Pilato ed., Phenolic Resins - A Century of Progress, Heidelberg 2010, p. 141). Phenol alcohols such as saligenin (ortho-hydroxybenzyl alcohol), homosaligenin (para-hydroxybenzyl alcohol) as well as trihydroxymethylphenol are formed, and depending on the stoichiometry and reaction conditions, resins with various degree of branching and condensation are formed. It is possible to use a smaller stoichiometric excess of formaldehyde, and replace at least partially the formaldehyde used in the crosslinking step (formation of resite, C-stage) by the crosslinkee B according to the present invention.

In addition to the phenolic compounds mentioned hereinabove, it is also possible to use phenolic compounds in the synthesis of novolaks N and resoles R, which may be made by depolymerisation processes from lignin, alone, or in a mixture of two or more thereof, or in combination with one or more of the phenolic compounds mentioned hereinabove. Lignin molecules may be depolymerised, e. g. by oxydative depolymerisation. In a study of O. Abdulaziz et al., ACS Sustainable Chem. Eng. 2020, 8, pages 8823 to 8829, a yield of mixed aromatic-aliphatic chemicals (hereinafter referred to as "alk(en)ylaromatic compounds", abbreviated as "aac") starting from Kraft lignin was achieved corresponding to a mass ratio m(aac)/m(KL) = 0.3 kg/kg, or 30 %. Other useful products include formic and acetic acids, together accounting for about 8 %. The aac include vanillin, IUPAC name: 4-hydroxy-3-methoxybenzaldehyde; isovanillin, IUPAC name: 3-hydroxy-4-methoxybenzaldehyde; ortho-vanillin, IUPAC name: 2-hydroxy-3-methoxybenzaldehyde; vanillic acid, IUPAC name: 4-hydroxy-3-methoxybenzoic acid; acetovanillone or apocynin, IUPAC name: 1-(4-hydroxy-3-methoxyphenyl)ethan-1-one; guaiacol, IUPAC name: 2-methoxyphenol; syringol, IUPAC name: 2,6-dimethoxyphenol; 2-methoxyresorcinol, IUPAC name: 2-methoxybenzene-1,3-diol; flamenol or 5-methoxyresorcinol, IUPAC name: 5-methoxybenzene-1,3-diol; p-coumarylalcohol, IUPAC name: 4-[(*E*)-3-hydroxyprop-1-enyl]phenol; coniferol or transconiferyl alcohol, IUPAC name: 4-[(*E*)-3-hydroxyprop-1-enyl]-2-methoxyphenol; sinapyl alcohol, IUPAC name: 4-[(*E*)-3-hydroxyprop-1-enyl]-2,6--methoxyphenol; and Hibbert ketones which are 3-(4-hydroxyphenyl)-propanones, optionally having further substituents in the propane chain such as a hydroxyl group, a further oxo group, a carboxyalkyl group, and further optionally having one or two additional alkoxy substituents in the phenyl group, where the alkoxy group is usually a methyl group, preferably in the 3-, or the 3-and 5-positions, of the phenyl group, derived from the p-hydroxyphenyl (H) groups, the guaiacyl (G) groups, and the syringyl (S) groups, which are derived from the monolignols p-coumarylalcohol, coniferylalcohol and sinapylalcohol. Further aac compounds are 2-methoxy-4-alkyl-phenols and 2,6-dimethoxy-4-alkyl-phenols, particularly 2-methoxy-4-methyl-phenol and 2,6-dimethoxy-4-methyl-phenol, where the alkyl groups may have from one to three carbon atoms, and optionally a carbon-carbon double bond, and are preferably selected from the group consisting of methyl, ethyl, n-propyl, and isopropyl groups; particularly eugenol (IUPAC name: 2-methoxy4-prop-2-enylphenol), trans- and cis-isoeugenol (IUPAC names: 2-methoxy-4-[(E)prop-1-enyl]phenol and 2-methoxy-4-[(Z)-prop-1-enyl]phenol), and the isomeric 4-allyl2,6-dimethoxy-phenols (IUPAC names: 2,6-dimethoxy-4-prop-2-enylphenol, 2,6-dimethoxy4-[(E)-prop-1-enyl]phenol and 2,6-dimethoxy-4-[(Z)-prop-1-enyl]phenol). Further chemicals that can be made from the aac mentioned supra are salicylic acid, ferulic acid (IUPAC name: (E)-3-(4-hydroxy-3-methoxyphenyl)prop-2-enoic acid). By oxydative depolymerisation of lignin over mixed metal catalysts under microwave heating, selectivity can be directed to butylphenols such as 4-tert-butyl-phenol, 2,4-di-tert-butyl-phenol, and 2,6-di-tert-butyl-phenol, see Panyadee, R. et al., Molecules 2021, 26, 7444. Variations in the depolymerisation process allow the partial or complete removal of methoxy groups, and thereby also offer direct access to alkylphenols, see Ji, Na, et al., Ind. Eng. Chem. Res. 2020, 59, 39, pages 17287 to 17299. Among these alkylphenols, 4-propylphenol is particularly mentioned which is directly related to p-coumarylalcohol which is the monolignol corresponding to the p-hydroxyphenyl groups (H) in lignin. It is also formed by removal of the methoxy groups (in the 3- or 3,5-positions) of the other monolignols, coniferylalcohol and sinapyl alcohol, corresponding to the guaiacyl- (G) and syringyl- (S) groups in lignin.

As the aac and their derivatives mentioned supra are all phenolic bodies, they can be used, alone, in mixture with at least one of the other aac compounds, or with one or more of phenol, cresol, or resorcinol, for the preparation of modified novolaks, or modified resoles, by reaction thereof with aliphatic or cycloaliphatic aldehydes, such as formaldehyde, acetaldehyde, propionic aldehyde, butyric and isobutyric aldehyde, aliphatic dialdehydes such as glyoxal, malonaldehyde, adipaldehyde, and glutaraldehyde, and cycloaliphatic aldehydes such as furfural (IUPAC name: furan-2-carbaldehyde), 5-hydroxymethylfurfural (IUPAC name: 5-(hydroxymethyl)furan-2-carbaldehyde), furane-2,5-dicarbaldehyde, and the isomeric 1,2-, 1,3-, and 1,4-cyclohexane dicarbaldehydes. These modified novolaks and resoles can be used together with the crosslinkers B according to the present invention.

Lignins L are generally classified into the groups of softwood, hardwood, and grass lignins. These native lignins are typically separated from the wood or other lignocelluloses in the form of "milled wood lignin" (MWL), "dioxane lignin", or "enzymatically liberated lignin". Industrially based technical lignins are by-products of chemical pulping: Kraft lignin (or sulphate lignin), alkali lignin (or soda lignin), and lignosulphonates are derived from lignocellulose subjected to the Kraft, the soda-anthraquinone, and the sulphite pulping processes. These pulping processes are directed to isolate the fibrous material (cellulose) from the lignocellulose. A further lignin source is the so-called acid hydrolysis lignin which is still mostly converted to pellets for firing. Other lignin grades have been made accessible by newer processes, viz., the organosolv process which provides a sulphur-free high purity lignin grade, and the hydrolysis process which is acid-catalysed and leads to formation of the so-called Hibbert ketones and of free phenolic moieties. Other emerging processes are the steam-explosion process and the ammonia-fibre expansion process. Any of these lignin materials may be used in the present invention, with the exception of lignosulphonates.

Lignin materials provided by different sources and separated from the cellulose and hemicellulose accompanying materials in lignocellulose by the different processes as detailed supra differ from each other, not only in the composition with regard to the shares of 4-hydroxyphenyl-, guaiacyl- (3-methoxy-4-hydroxyphenyl-), and syringyl- (3,5-dimethyoxy-4-hydroxyphenyl-) units of the C₉-building blocks in lignin, which is different for gymnosperms (predominantly guaiacyl units), angiosperms (both guaiacyl and syringyl units), and grass (predominantly 4-hydroxylphenyl units) but also in the decomposition that follows different routes depending on the kind of pulping process. Therefore, the lignins obtained by the processes supra have also variations in the molar mass, as reported in "Molar mass determination of lignins by size-exclusion chromatography", S. Baumberger et al., Holzforschung 2007 (61), pages 459 to 468.

It is also possible to generate fractions of high molar mass lignin, and low molar mass lignin by fractionated precipitation, see WO 2013/144 453 A1. These lignin fractions may be collected, e. g., in a first mixture comprising substantially lignin oligomers and polymers of a low degree of polymerisation (hereinafter each individually, and all collectively referred to as low molar mass lignins, "LML") having from 1 to 10 monomer units, and in a second mixture comprising substantially lignin polymers (hereinafter collectively referred to as high molar mass lignins, "HML") having from 11 to 70 monomer units. Any larger number of mixtures, each comprising different groups of oligomers and polymers, may also be collected from the isolated fractions provided by controlled precipitation, or other separation processes. The molar masses of lignin can be determined according to the method described in Linping Wang et al., Holzforschung 2019; 73(4): 363 to 369, by size-exclusion chromatography of acetylated samples of the lignin fractions. These mixtures can be condensed individually with aldehydes, and mixed thereafter, or they can be condensed in sequence, and the addition time of phenol and aldehyde can be varied. In WO 2013/144 453 A1, variations of the condensation process lead to different levels of the possibility of substitution of phenol by lignin. Similar results have been obtained in our investigations when using such lignin fractions prepared according to WO 2013/144 453 A1, together with the crosslinkers B. In the course of the investigations which have led to the present invention, two or more than two groups of lignin fractions which are crosslinked with the crosslinkers B of the present invention have been found to lead to good results. Therefore, it is also an embodiment of the invention to use at least two, preferably more than two, and particularly, three or more, lignin fractions having different values of the average degree of polymerisation together with the crosslinkers B. An example is the use of a mixture of four different fractions of lignin in the reaction with the crosslinkers B. The first of these fractions F1 groups comprises lignin oligomers having a degree of oligomerisation of from 1 to n, the second of these fractions F2 groups comprises lignin oligomers or polymers having a degree of oligomerisation or polymerisation of from n+1 to m, the third of these fractions F3 groups comprises lignin oligomers having a degree of oligomerisation or polymerisation of from m+1 to o, and the fourth of these fractions F4 groups comprises lignin oligomers or polymers having a degree of oligomerisation or polymerisation of o+1 or more. The degree of oligomerisation or of polymerisation is the number of lignin monomer units in a oligomer or polymer molecule. Given an average molar mass of approximately 180 g/mol of a phenylpropane monomer unit having one methoxy group of approximately 180 g/mol, useful values for n, m, and o, in the case of four groups, is n = 7, m = 14, o = 21, where n is at least 7, m is at least 14, and o is at least 21, and if n is increased by 1, the value of m is increased by 2 and the value of o is increased by 3. Other useful values are therefore n = 8, m= 16, and o = 24, and increasing values of n, m, and o to 9, 18, and 27; 10, 20, and 30; 11, 22, and 33; and 12, 24, and 36; and so forth by increasing the values for n, m, and o by one, two, and three, respectively, until 20, 40, and 60.

Lower molar mass lignins which have higher reactivity can be obtained by controlled degradation, or decomposition. Several ways of achieving controlled degradation, or decomposition have been described in the literature, including enzymatic decomposition, oxydative cleavage, pyrolysis, and treatment with radical forming systems.

It is also possible to purify lignin from any of the sources mentioned, by a plethora of methods including ultrasonic extraction, solvent extraction, dialysis, and hot water treatment. It is particularly important to remove inorganic impurities such as sulphur which stems from the process chemicals.

The reactivity of lignin can be increased by various processes, including demethylation, methylolation/hydroxymethylation, phenolation/phenolysis, reduction, oxydation, hydrolysis, and alkalation. See, e.g. Hu, LiHong, et al., Bioresources 6(3), pages 3515 to 3525, and WO 2013/144 454 A1. These techniques have been used to improve purity and reactivity of the lignin samples used in this invention.

All modified lignins mentioned hereinabove, as well as native lignins, and lignins obtained by the processes described in the literature can be used as lignins L, in the context of the present invention.

The natural aromatic polymers P other than lignin having aromatic moieties with increased electron density in comparison with benzene at unsubstituted carbon atoms in the said aromatic moiety are preferably selected from the group consisting of tannins T, particularly gallotannins, ellagitannins, complex tannins and condensed tannins. As these compounds have many phenolic hydroxyl groups, it has proved to be advantageous to conduct the azo coupling in a weakly alkaline medium to convert the phenolic hydroxyl groups to phenolate ions, thus providing a higher electron density in the aromatic rings and thereby facilitating the coupling reaction.

Further aromatic polymers P based on natural polymers can be used, especially polysaccharides such as cellulose, amylose, amylopectin, and amino polysaccharides such as chitin and chitosan; in order to be able to react with the electrophilic diazonium compound B, it can be grafted with electron-rich aromatic compounds having reactive groups, e. g., (di)methoxystyrene. Such grafting can also be applied to lignin, where an improvement of reactivity of the graft product toward electrophilic substitution in the aromatic moieties has been noted.

The novolaks N, resoles R, lignin L, tannin T, and also the other polymers P can each be used alone, in combination with other components of the same class, or with at least one component of at least one other class. Therefore, combinations of at least two novolaks N1 and N2 which are chemically or physically different, combinations of at least two resoles R1 and R2 which are chemically or physically different, by changing the phenol component or the aldehyde component, or the degree of polymerisation, and also combinations of a novolak N or of a resole R, with one or more of a lignin L, a lignin component comprising at least two fractions L1 and L2 of lignin molecules having different degrees of polymerisation or different compositions in terms of the relative abundance of H, G, and S units, and a tannin T can also be used within the scope of this invention.

The crosslinkable systems of the present invention are preferably made in the following way:
- a solution of an aromatic diamine, or of an aromatic triamine, or of a mixture of at least one aromatic diamine, or of a mixture of at least one aromatic triamine, or of a mixture of at least one aromatic diamine with at least one aromatic triamine in an aqueous acid is prepared, and cooled to a temperature of 25 °C or less, preferably not more than 20 °C, particularly preferred, not more than 15 °C, and especially preferred, not more than 10 °C,
- to the solution of the first step, a solution of an alkali nitrite is added and mixed at a temperature of 25 °C or less, preferably not more than 20 °C, particularly preferred, not more than 15 °C, and especially preferred, not more than 10 °C,
- the mixture of the second step is added to a solution or slurry of at least one organic polymer P having aromatic moieties with increased electron density in comparison with benzene at unsubstituted carbon atoms in the said aromatic moiety.
It is also possible to use solid crosslinkers B having at least two diazonium groups in such cases where less soluble or insoluble salts are formed in the second step of the process described hereinabove, preferably with anions such as tetrafluoroborate or hexafluorophosphate, together with at least one organic polymer P having aromatic moieties with increased electron density in comparison with benzene at unsubstituted carbon atoms in the said aromatic moiety, in solid form.

In a preferred embodiment, the organic polymer is a novolak N, or a lignin L, or mixture of a novolak N and a lignin L.

The novolaks N and other natural aromatic polymers P including lignin L and tannin T having aromatic moieties with increased electron density in comparison with benzene at unsubstituted carbon atoms in the said aromatic moiety, when crosslinked with the crosslinkers B of the present invention, can be used for a wide variety of applications, particularly as adhesives for composite wood materials, as binders for organic or inorganic fibre products, as binders in abrasive materials or in friction materials such as brake pads, in heat and sound insulation materials, as foams, or as foundry moulds. Due to the low propensity of evolution of volatile chemicals upon heating, they are particularly suited for applications in elevated temperature regimes.

### Embodiments of the Invention

The following embodiments are encompassed:
1. Crosslinkable systems comprising an organic polymer P having aromatic moieties with increased electron density in comparison with benzene at unsubstituted carbon atoms in the said aromatic moiety, and a crosslinker B which is an aromatic compound having least two diazonium groups of formula -^{⊕}N≡N.
2. The crosslinkable systems of embodiment 1 wherein the organic polymer P comprises at least one of a novolak N, a resole R, a lignin L, a tannin T, and a further organic polymer which bears aromatic moieties derived from alkoxylated styrene.
3. The crosslinkable systems of embodiment 2 wherein the organic polymer P is a novolak N made by reaction of at least one phenolic compound, and at least one aldehyde selected from the group consisting of formaldehyde, acetaldehyde, propionaldehyde, butyraldehyde, and isobutyraldehyde, glyoxal, malonaldehyde, succinaldehyde, and glutaraldehyde; and furfural, 5-hydroxymethylfurfural, and furan-2,5-dicarbaldehyde.
4. The crosslinkable systems of embodiment 3 wherein the phenolic compound is selected from the group consisting of phenol, o-cresol, m-cresol, p-cresol, resorcinol, and bisphenol A, and from phenolic compounds obtainable by depolymerisation of lignin.
5. The crosslinkable systems of embodiment 3 wherein the novolak N is made by reaction of phenol and formaldehyde.
6. The crosslinkable systems of embodiment 2 wherein the organic polymer comprises a lignin L, or mixtures of a lignin L with a novolak N.
7. The crosslinkable systems of any one of embodiments 1 to 6 wherein the crosslinkers B are aromatic compounds having at least two diazonium groups of formula - ^{⊕}N≡N derived from aromatic diamines and aromatic polyamines by reaction thereof with nitrous acid.
8. The crosslinkable systems of any one of embodiments 1 to 6 wherein the crosslinkers B are derived from aromatic diamines having two amino groups directly bound to aromatic moieties by reaction thereof with nitrous acid, wherein the aromatic diamines are selected from the group consisting of 1,2-diaminobenzene, 1,3-diaminobenzene, 1,4-diaminobenzene, 2,3-diaminotoluene, 2,4-diaminotoluene, 3,4-diaminotoluene, 1,2-diaminonaphthalene, 1,4-diaminonaphthalene, 1,5-diaminonaphthalene, 1,8-diaminonaphthalene, 4,4'-diaminodiphenyl, 3,3'-dimethyl-4,4'-diaminodiphenyl, 3,3',5,5'-tetramethyl-4,4'-diaminodiphenyl, 2,7-diaminofluorene, 4,4'-diaminodiphenylmethane, 3,4'-diaminodiphenylmethane, 4,4'-diaminostilbene, 4,4'-diaminobenzophenone, 4,4'-diaminodiphenylsulphone, 2,2'-diaminodiphenylether, 4,4'-diaminodiphenylether, 3,4'-diaminodiphenylether, 2,7-diaminofluorene, bis-(3-aminophenyl)methane, 1,3-bis(4-aminophenoxy)-benzene, 4,4'-bis-(4-aminophenoxy)-biphenyl, 2,2-bis[4-(4-aminophenoxy)-phenyl]-propane, and the phosphorus-based aromatic diamines bis-(4-aminophenyl)phosphinoxide, bis-(3-aminophenyl)-phosphinoxide, bis-(2-aminophenyl)phosphinoxide, P-alkyl derivatives thereof where the alkyl group is methyl, ethyl, n-propyl, isopropyl, n-butyl, or isobutyl, and from mixtures of two or more of any of the diamines mentioned.
9. The crosslinkable systems of any one of embodiments 1 to 6 wherein the crosslinkers B are derived from aromatic triamines having three amino groups directly bound to aromatic moieties by reaction thereof with nitrous acid, wherein the aromatic triamines are selected from the group consisting of 1,3,5-tris-(4-aminophenyl)benzene, 1,3,5-tris-(4-amino-phenoxy)benzene, 2,4-bis-(p-aminobenzyl)aniline, tris-(4-aminophenyl)methane, 1,3,5-tris-(4-aminophenylcarbamoyl)benzene, 4-((4-amino3,5-diethylphenyl)methyl)-2-((4-aminophenyl)methyl)aniline, 2-((4-amino-3,5-diethylphenyl)methyl)4-((4-aminophenyl)methyl)-aniline, 4-((4-amino-3-isopropylphenyl)methyl)-2-((4-aminophenyl)methyl)aniline, 2-((4-amino-3-isopropylphenyl)methyl)-4-((4-aminophenyl)methyl)aniline, 4-((4-amino-3,5-diisopropylphenyl)methyl)-2-((4-aminophenyl)methyl)aniline, 2-((4-amino3,5-diisopropylphenyl)methyl)-4-((4-aminophenyl)methyl)aniline, 5'-[4-(dimethylamino)phenyl]-N,N,N',N'-tetramethyl-1,1':3',1"-terbenzene-4,4"-diamine, 2,4-diphenylbenzene-1,3,5-triamine, 3,5-bis[(4-aminophenyl)methyl]aniline, 1,3,5-tris(4-aminophenyl)benzene, 4,4',4"-methane-triyltris(2-methylaniline), 4,4',4"-ethylidynetrisaniline, bis-(4-aminophenyl)phosphinoxide, tris-(4-aminophenyl)phosphinoxide, tris-(3-aminophenyl)phosphinoxide, tris-(2-aminophenyl)phosphinoxide, and from mixtures of two or more of any of the triamines mentioned.
10. A process for the preparation of crosslinkable systems of any one of embodiments 1 to 9, comprising the steps of
   - preparing a solution of an aromatic diamine, or of an aromatic triamine, or of a mixture of at least one aromatic diamine, or of a mixture of at least one aromatic triamine, or of a mixture of at least one aromatic diamine with at least one aromatic triamine in an aqueous acid solution, and cooling thereof to a temperature of 25 °C or less,
   - adding to the solution of the first step a solution of an alkali nitrite, and mixing at a temperature of 15 °C or less,
   - adding the mixture of the second step to a solution or slurry of at least one organic polymer P having aromatic moieties with increased electron density in comparison with benzene at unsubstituted carbon atoms in the said aromatic moiety.
11. The process of embodiment 10 wherein the organic polymer is a novolak N.
12. The process of embodiment 10 wherein the organic polymer is a resole R.
13. The process of embodiment 10 wherein the organic polymer is a lignin L.
14. The process of embodiment 10 wherein the organic polymer P comprises a mixture of a novolak N, or a resole R, and a lignin L.
15. A method of use of the crosslinking systems of one or more of embodiments 1 to 9, or of crosslinking systems prepared according to one or more of embodiments 10 to 14, as binder in adhesives, in abrasives, in moulding powders or compounds, in foundry moulds, in laminates, in heat and sound insulation materials, in rubber materials, or as binder for coatings.

### Examples

### Example 1 Preparation of a Bis-Diazonium Compound

Three slurries were prepared from 4,4'-diaminodiphenylsulfone (M=248.30 g/mol); slurry 1a: 0.621 g, 2.5 mmol; slurry 1b: 0.310 g, 1.25 mmol; and slurry 1c: 0.062 g, 0.25 mmol, each in an aqueous solution of hydrochloric acid (mass fraction w(HCl) of dissolved hydrogen chloride was 18.5 %), viz. slurry 1a: 5.5 mL; slurry 1b: 2.8 mL; slurry 1c: 2.8 mL, and all were cooled in an ice bath to a temperature below 5 °C. An aqueous solution of sodium nitrite was prepared by dissolving sodium nitrite in water with a concentration of 2 mol/L, corresponding to 140 g/L. Of this solution, the following portions were added dropwise under continued cooling: to slurry 1a: 0,345 g; to slurry 1b: 0,172 g; and to slurry 1c: 0,035 g, whereupon a clear solution was obtained in each case. These resulting solutions sla, s1b, and s1c were stirred for fifteen minutes under cooling, and were used as such to cure novolak samples.

### Example 2 Reaction with Novolaks

A novolak was prepared by charging 940 g of phenol, 9.4 g of oxalic acid, and 500 g of an aqueous solution of formaldehyde with a mass fraction of formaldehyde of 30 % to a resin kettle, and heating under reflux for three hours. Volatile substances were removed by heating, starting at normal pressure, and finally, under vacuum generated with a water jet pump, at temperatures up to 220 °C in the still. The free phenol content of this novolak corresponded to a mass fraction *w*(Ph) = *m*(Ph) / *m*(NL) = 0.05 %. Three samples each of 0.531 g of this novolak were dissolved in an aqueous solution of sodium hydroxide with a concentration of 2 mol/L, corresponding to 80 g/L (s2a: 19 mL; s2b: 12 mL; and s2c: 12 mL), and the solutions were cooled in an ice bath to below 5 °C. The solutions sla, s1b, and s1c of the diazonium salt prepared in Example 1 were added dropwise to the solutions s2a, s2b, and s2c, respectively, under stirring, generating a red precipitate. After complete addition, the reaction mixtures were stirred for a further hour at room temperature (23 °C). The red suspensions were then poured into vessels filled with 150 mL of dilute hydrochloric acid (mass fraction of HCl was ca. 12 %), the precipitates were each separated by filtration, and rinsed with several portions of water. The resulting solids a, b and c were dried and characterised by HPLC and GPC.

### Example 3 HPLC Analysis

A sample of 50 mg of each of the solids obtained in Example 2 (referred to as solids a, b, and c) was suspended in a mixture of water and tetrahydrofurane (in a mass ratio of 3:7) and homogenised during ten minutes in an ultrasonic bath. The resulting suspension was transferred via a syringe filter to a chromatography vial, and the clear filtrate was analysed in a HPLC-UV/vis system, with the following conditions:
solvent A: aqueous solution of lithium formiate, 0.05 mol/L, pH = 3.8
solvent B: tetrahydrofurane (THF)
eluent: gradient, from 95 % A to 100 % B
flow: 0.3 mL/min
column: reverse phase (C18)
detector: UV/vis, 200 nm to 600 nm

### Example 4 GPC Analysis

Samples of 25 mg of each of the solids 2a, 2b, and 2c were suspended in pure THF and homogenised during ten minutes in an ultrasonic bath. The resulting suspension was transferred via a syringe filter to a chromatography vial, and the clear filtrate was analysed in a GPC-UV system, using the following parameters:
eluent: THF
flow: 0.6 mL/min
columns (pore size) : 50 Å, 100 Å, 1000 Å
calibration: polystyrene standards
detector: UV, 280 nm

### Test Results

In the mass of 0.531 g of the novolak used in these experiments, the amount of substance of phenol is 5 mmol in all cases. In the diazonium salt solutions, the amount of substance of diazonium groups was in solution sla: 5 mmol, in solution s1b: 2.5 mmol, and in solution s1c: 0.5 mmol. Thus, the ratio of the amount of substance of phenol moieties to diazonium moieties is 1:1 in case a, 2:1 in case b, and 10:1 in case c.

The test results are also visualised in the attached figures, where Fig. 1 and Fig. 2 show gel permeation chromatogrammes and Fig. 3 shows UV / VIS spectra. The ordinate shows absorbance units in all cases, which have been scaled for optimum presentation, the abscissa in the gel permeation chromatogrammes shows elution time, measured in minutes, while in the UV/VIS spectrum, the abscissa shows the wavelength of light in nm (nanometres).

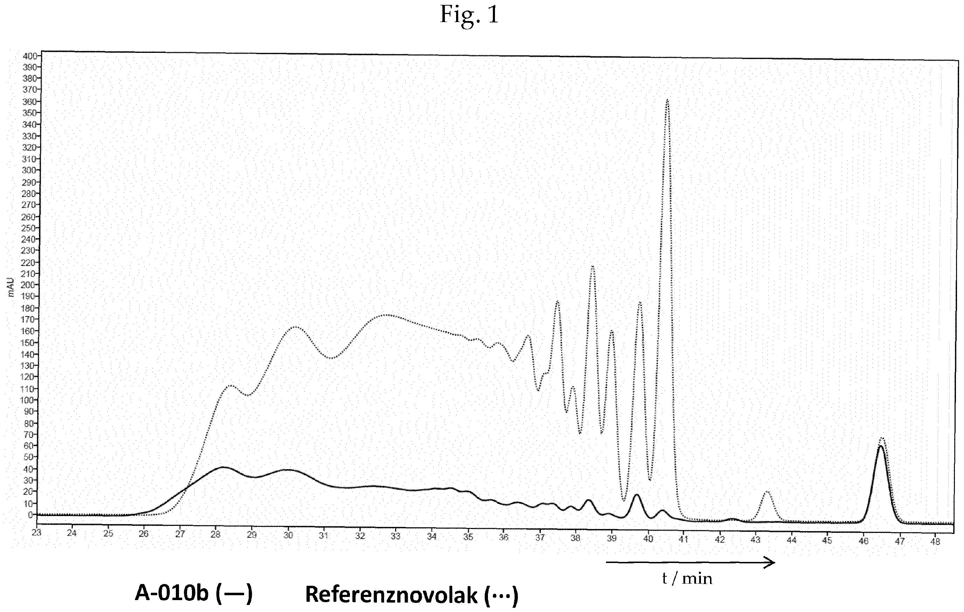

In Fig. 1, gel chromatogrammes of the solids c of Example 2, and of the unmodified novolak ("Referenz-Novolak" = reference, dotted line) have been plotted. A significant increase in higher molar mass species can be seen in case c in the form of an additional peak at low elution volume corresponding to an elution time between 25 min and 26 min, and higher signals for the higher molar mass peaks at elution times between 25 min and 31 min; see solid line in Fig. 1 marked as "A-010 c".

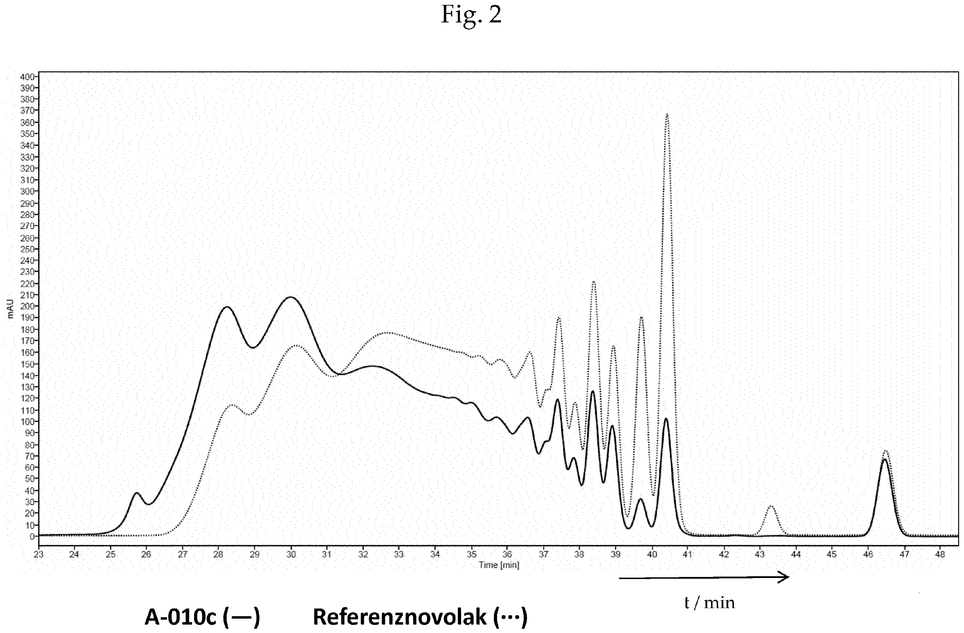

Likewise, in Fig. 2 where gel chromatogrammes of the solids b of Example 2, and of the unmodified novolak ("Referenz-Novolak" = reference, dotted line) have been plotted, in the case b, a high molar mass tail is seen at elution times between 26 min and 28 min (see solid line marked as "A-010 b" in Fig. 2); the signal level is generally much lower for case b as the solubility was significantly lowered.

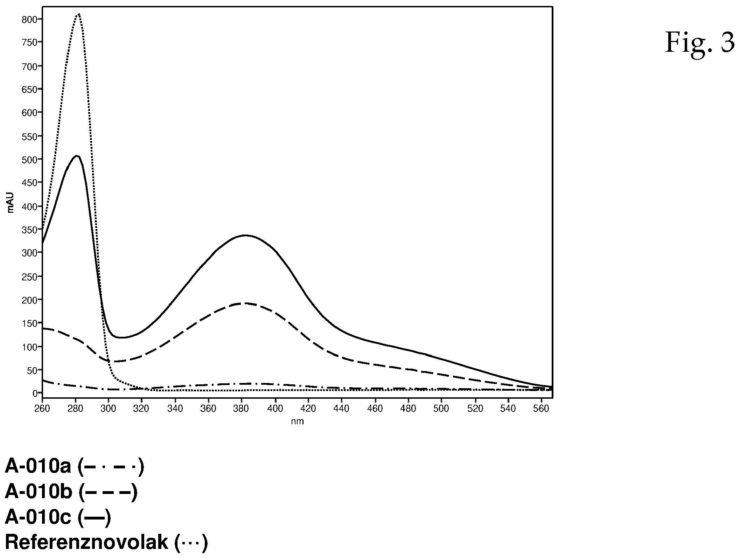

In Fig. 3, where the absorption spectrum in the ultraviolet and visible regions are shown for all of the samples a, b, and c of Example 2, together with th reference novolak. Incorporation of the diazo moieties into the phenolic backbone of the novolak can be seen from the π,π*-peak at 380 nm in the UV-VIS spectra recorded (showing the spectra of the samples of Example 2; lines for samples a, b and c are marked as "A-010 a", "A-010 b", and "A-010 c", unmodified novolak is marked as "reference"). The decrease in this absorption peak is due to reduced solubility of the crosslinked material as the spectra were not normalised to the same concentration of solute.

It can be seen, therefore, that the bisdiazonium compounds used in the examples have led to efficient crosslinking.

## Claims

1. Crosslinkable systems comprising an organic polymer **P** having aromatic moieties with increased electron density in comparison with benzene at unsubstituted carbon atoms in the said aromatic moiety, and a crosslinker **B** which is an aromatic compound having least two diazonium groups of formula -^{⊕}N≡N.

2. The crosslinkable systems as claimed in claim 1 wherein the organic polymer **P** comprises at least one of a novolak **N**, a resole **R**, a lignin **L**, a tannin **T**, and a further organic polymer which bears aromatic moieties derived from alkoxylated styrene.

3. The crosslinkable systems as claimed in claim 2 wherein the organic polymer P is a novolak **N** made by reaction of at least one phenolic compound, and at least one aldehyde selected from the group consisting of formaldehyde, acetaldehyde, propionaldehyde, butyraldehyde, and isobutyraldehyde, glyoxal, malonaldehyde, succinaldehyde, and glutaraldehyde; and furfural, 5-hydroxymethylfurfural, and furan-2,5-dicarbaldehyde.

4. The crosslinkable systems as claimed in claim 3 wherein the phenolic compound is selected from the group consisting of phenol, o-cresol, m-cresol, p-cresol, resorcinol, and bisphenol A, and from phenolic compounds obtainable by depolymerisation of lignin.

5. The crosslinkable systems as claimed in claim 3 wherein the novolak N is made by reaction of phenol and formaldehyde.

6. The crosslinkable systems as claimed in claim 2 wherein the organic polymer comprises a lignin L, or mixtures of a lignin L with a novolak N.

7. The crosslinkable systems as claimed in any one of claims 1 to 6 wherein the crosslinkers **B** are aromatic compounds having at least two diazonium groups of formula - ^{⊕}N≡N derived from aromatic diamines and aromatic polyamines by reaction thereof with nitrous acid.

8. The crosslinkable systems as claimed in any one of claims 1 to 6 wherein the crosslinkers B are derived from aromatic diamines having two amino groups directly bound to aromatic moieties by reaction thereof with nitrous acid, wherein the aromatic diamines are selected from the group consisting of 1,2-diaminobenzene, 1,3-diaminobenzene, 1,4-diaminobenzene, 2,3-diaminotoluene, 2,4-diaminotoluene, 3,4-diaminotoluene, 1,2-diaminonaphthalene, 1,4-diaminonaphthalene, 1,5-diaminonaphthalene, 1,8-diaminonaphthalene, 4,4'-diaminodiphenyl, 3,3'-dimethyl-4,4'-diaminodiphenyl, 3,3',5,5'-tetramethyl-4,4'-diaminodiphenyl, 2,7-diaminofluorene, 4,4'-diaminodiphenylmethane, 3,4'-diaminodiphenylmethane, 4,4'-diaminostilbene, 4,4'-diaminobenzophenone, 4,4'-diaminodiphenylsulphone, 2,2'-diaminodiphenylether, 4,4'-diaminodiphenylether, 3,4'-diaminodiphenylether, 2,7-diaminofluorene, bis-(3-aminophenyl)methane, 1,3-bis(4-aminophenoxy)-benzene, 4,4'-bis-(4-aminophenoxy)-biphenyl, 2,2-bis[4-(4-aminophenoxy)-phenyl]-propane, and the phosphorus-based aromatic diamines bis-(4-aminophenyl)phosphinoxide, bis-(3-aminophenyl)phosphinoxide, bis-(2-aminophenyl)phosphinoxide, P-alkyl derivatives thereof where the alkyl group is methyl, ethyl, n-propyl, isopropyl, n-butyl, or isobutyl, and from mixtures of two or more of any of the diamines mentioned.

9. The crosslinkable systems as claimed in any one of claims 1 to 6 wherein the crosslinkers B are derived from aromatic triamines having three amino groups directly bound to aromatic moieties by reaction thereof with nitrous acid, wherein the aromatic triamines are selected from the group consisting of 1,3,5-tris-(4-aminophenyl)benzene, 1,3,5-tris-(4-amino-phenoxy)benzene, 2,4-bis-(p-aminobenzyl)aniline, tris-(4-aminophenyl)methane, 1,3,5-tris-(4-aminophenylcarbamoyl)benzene, 4-((4-amino3,5-diethylphenyl)methyl)-2-((4-aminophenyl)methyl)aniline, 2-((4-amino-3,5-diethylphenyl)methyl)4-((4-aminophenyl)methyl)-aniline, 4-((4-amino-3-isopropylphenyl)methyl)-2-((4-aminophenyl)methyl)aniline, 2-((4-amino-3-isopropylphenyl)methyl)-4-((4-aminophenyl)methyl)aniline, 4-((4-amino-3,5-diisopropylphenyl)methyl)-2-((4-aminophenyl)methyl)aniline, 2-((4-amino3,5-diisopropylphenyl)methyl)-4-((4-aminophenyl)methyl)aniline, 5'-[4-(dimethylamino)phenyl]-N,N,N',N'-tetramethyl-1,1':3',1"-terbenzene-4,4"-diamine, 2,4-diphenylbenzene-1,3,5-triamine, 3,5-bis[(4-aminophenyl)methyl]aniline, 1,3,5-tris(4-aminophenyl)benzene, 4,4',4"-methane-triyltris(2-methylaniline), 4,4',4"-ethylidynetrisaniline, bis-(4-aminophenyl)phosphinoxide, tris-(4-aminophenyl)phosphinoxide, tris-(3-aminophenyl)phosphinoxide, tris-(2-aminophenyl)phosphinoxide, and from mixtures of two or more of any of the triamines mentioned.

10. A process for the preparation of crosslinkable systems as claimed in any one of claims 1 to 9, comprising the steps of
- preparing a solution of an aromatic diamine, or of an aromatic triamine, or of a mixture of at least one aromatic diamine, or of a mixture of at least one aromatic triamine, or of a mixture of at least one aromatic diamine with at least one aromatic triamine in an aqueous acid solution, and cooling thereof to a temperature of 25 °C or less,
- adding to the solution of the first step a solution of an alkali nitrite, and mixing at a temperature of 15 °C or less,
- adding the mixture of the second step to a solution or slurry of at least one organic polymer P having aromatic moieties with increased electron density in comparison with benzene at unsubstituted carbon atoms in the said aromatic moiety.

11. The process of claim 10 wherein the organic polymer is a novolak N.

12. The process of claim 10 wherein the organic polymer is a resole R.

13. The process of claim 10 wherein the organic polymer is a lignin L.

14. The process of claim 10 wherein the organic polymer P comprises a mixture of a novolak N, or a resole R, and a lignin L.

15. A method of use of the crosslinking systems of one or more of claims 1 to 9, or of crosslinking systems prepared according to one or more of claims 10 to 14, as binder in adhesives, in abrasives, in moulding powders or compounds, in foundry moulds, in laminates, in heat and sound insulation materials, in rubber materials, or as binder for coatings.
